# EUROPÄISCHE PATENTSCHRIFT

(11) **EP 3 942 684 B1**
(45) Veröffentlichungstag und Bekanntmachung des Hinweises auf die Patenterteilung: **26.06.2024**
(21) Anmeldenummer: 20714962.6
(22) Anmeldetag: 20.03.2020
(51) Int. Cl.: H02M 3/156, H05B 45/385

(54) **SYNCHRONE SPERRWANDLERSCHALTUNG**
SYNCHRONOUS FLYBACK CONVERTER
CONVERTISSEUR SYNCHRONE À RETOUR DE FLAMME

(30) Priorität: 21.03.2019 DE 102019107225
(43) Veröffentlichungstag der Anmeldung: 26.01.2022
(73) Patentinhaber: Tridonic GmbH & Co KG, 6851 Dornbirn (AT)
(72) Erfinder: KLOTZ, Reimar, 6850 Dornbirn (AT)
(74) Vertreter: Beder, Jens
(86) Internationale Anmeldenummer: PCT/EP2020/057805
(87) Internationale Veröffentlichungsnummer: WO 2020/188091

(56) Entgegenhaltungen:
- DE-A1-102014 116 337
- US-A1- 2003 090 914
- US-A1- 2018 294 731
- US-A1- 2018 294 734
- US-A1- 2018 294 735

## Beschreibung

Die vorliegende Erfindung betrifft eine Sperrwandlerschaltung und ein Verfahren zum Steuern einer Sperrwandlerschaltung. Die Erfindung betrifft insbesondere einen getakteten Sperrwandler für den Einsatz in einem Betriebsgerät für Leuchtmittel, insbesondere Leuchtdioden.

Ein Sperrwandler, auch Hoch-Tiefsetzsteller (englisch "flyback converter") genannt, ist ein Gleichspannungswandler, der elektrische Energie zwischen einer Eingangs- und einer Ausgangsseite mittels eines Transformators galvanisch entkoppelt überträgt. Mit einem Sperrwandler kann eine am Eingang zugeführte Gleichspannung mit geringem schaltungstechnischen Aufwand in eine Gleichspannung mit einem anderen Spannungsniveau umgewandelt werden, wobei der Niveauunterschied in einfacher Weise durch die Wahl des Wicklungsverhältnisses des Transformators beeinflussbar ist.

Aus der US 2014/0153292 A1 ist eine getaktete Sperrwandlerschaltung bekannt, bei der eine Steuereinrichtung einen die Primärspule des Transformators an Masse ankoppelnden Schalter zur Taktung des Sperrwandlers selektiv mit einer bestimmten Frequenz und Einschaltdauer ein- und wieder ausschaltet. Die US 2014/0153292 A1 schlägt vor, eine solche getaktete Sperrwandlerschaltung zur direkten Speisung von Leuchtdioden (LEDs) zu nutzen, wobei der durch den steuerbaren Schalter fließende Strom mittels eines Messwiderstands erfasst und der Schalter ausgeschaltet wird, sobald der erfasste Strom einen vorgegebenen Schwellenwert für den maximalen Schalterstrom (Spitzenstromwert) erreicht.

Gemäß der US 2014/0153292 A1 wird für eine Regelung der Abgabeleistung der Schwellenwert an die ermittelte Abweichung zwischen dem an die Leuchtdioden abgegebenen Strom und einem vorgegebenen Soll-Abgabestrom angepasst. Der an die Leuchtdioden abgegebene Strom wird hierzu mittels der von einer primärseitigen Hilfswicklung des Transformators abgegebenen Spannung bestimmt, was ein Aufrechthalten der galvanischen Trennung ermöglicht, wobei in dem Verlauf der Spannung der Zeitpunkt der abfallenden Flanke ermittelt wird, um die Zeitdauer des Stromflusses durch die Sekundärwicklung in der Sperrphase zu bestimmen.

Dies hat den Nachteil, dass für die Erfassung des sekundärseitigen Stroms eine Hilfswicklung nötig ist, was den Aufbau insgesamt komplex und teuer macht. Zudem ist die Bestimmung des an die Leuchtdioden abgegebenen Stroms auf der Grundlage der Stromflusszeitdauer ungenau.

Die US 2018/0294734 A1 offenbart eine synchrone Sperrwandlerschaltung, bei der der die sekundärseitig nötige Diode ersetzende zweiter Schalter ausgeschaltet wird, wenn der Strom durch den zweiten Schalter einen negativen Wert erreicht hat, nachdem er auf null abgesunken ist, um parasitäre Kapazitäten mittels dem negativen Magnetisierungsstroms zu entladen und ein sicheres Nullspannungsschalten (Zero Voltage Switching) des ersten Schalters auf der Primärseite zu ermöglichen. Der auf diese Weise für die Entladung der parasitären Kapazitäten erzeugte Strom hängt von der Höhe des zum Ausschaltzeitpunkts durch den zweiten Schalter fließenden Stroms und dem Aufbau des Transformators (Induktivität L und Windungsverhältnis n) ab, wobei die Höhe des durch den zweiten Schalter fließenden Stroms von der Zeitspanne t vom Zeitpunkt des Stromnulldurchgangs bis zum Ausschaltzeitpunkt und der Spannung des Pufferkondensators bzw. der von der Sperrwandlerschaltung abgegebenen Spannung U abhängt. Gemäß der US 2018/0294734 A1 kann die Amplitude des negativen Magnetisierungsstroms I mittels der Formel I = n/L · U · t bestimmt werden.

Für eine Anpassung des für die Entladung der parasitären Kapazitäten vorgegebenen Stroms an unterschiedliche von der Sperrwandlerschaltung abzugebende Spannungen schlägt die US 2018/0294734 A1 vor, die von der Sperrwandlerschaltung abgegebene Spannung zu erfassen und die Zeitspanne entsprechend der erfassten Spannung zu variieren.

Der Erfindung liegt die Aufgabe zugrunde, Vorrichtungen und Verfahren anzugeben, die die beschriebenen Probleme verringern. Aufgabe ist es insbesondere, eine Sperrwandlerschaltung, ein Betriebsgerät für den Betrieb von einem oder mehreren Leuchtmitteln, insbesondere LEDs, und ein Verfahren zum Steuern einer Sperrwandlerschaltung bereitzustellen, die eine genaue Steuerung und Regelung über einen großen Lastbereich mit einem einfachen und kostengünstigen Aufbau erlauben.

Diese Aufgabe wird gemäß den Merkmalen der unabhängigen Ansprüche gelöst. Die Erfindung wird durch die Merkmale der abhängigen Ansprüche weitergebildet.

Die Erfindung wird durch die Sperrwandlerschaltung mit den Merkmalen gemäß Anspruch 1 und das Verfahren zur Steuerung der Sperrwandlerschaltung mit den Merkmalen gemäß Anspruch 9 definiert.

Die Entladegeschwindigkeit ist ein Indikator für den sekundären negativen Strom zum Zeitpunkt des Ausschaltens des zweiten Schalters, welcher zur Steuerung des (negativen) Spitzenstromes verwendet werden kann, ohne die von der Sperrwandlerschaltung abgegebene Spannung auf der Sekundärseite bzw. die Spannung am Pufferkondensator direkt zu erfassen.

Alternativ oder zusätzlich kann die von der Sperrwandlerschaltung abgegebene Spannung ermittelt werden, da die Spannung auf der Primärseite des Transformators während der Entmagnetisierungsphase (beginnend nach dem Öffnen des primärseitigen Schalters bei bekanntem Windungsverhältnis n des Transformators) aufgrund des Kopplungsverhältnisses des Transformators proportional zu der Spannung auf der Sekundärseite des Transformators ist. Wenn der sekundärseitige Schalter geschlossen ist, entspricht die Spannung am Pufferkondensator bzw. der von der Sperrwandlerschaltung abgegebenen Spannung U der Spannung über der Sekundärseite des Transformators.

In der Sperrwandlerschaltung ersetzt der zweite Schalter die sekundärseitig nötige Diode oder ist zu dieser parallel geschaltet. Dies erlaubt eine Umkehrung des Energieflusses, nämlich von dem sekundärseitig vorgesehenen Pufferkondensator zur Primärseite (Synchrone Sperrwandlerschaltung). Der bei der Umkehrung durch den zweiten Schalter unmittelbar vor dem Ausschalten des zweiten Schalters fließende Strom hängt vom Ausschaltzeitpunkt und von der Ladung des Pufferkondensators bzw. der von der Sperrwandlerschaltung abgegebenen Spannung ab und bewirkt durch das Ausschalten auf der Primärseite eine Entladung der zu dem ersten Schalter parallel geschalteten Kapazität, wobei die Entladegeschwindigkeit von der Höhe des durch den zweiten Schalter zum Zeitpunkt seines Ausschaltens fließenden Stroms abhängt. Gemäß der vorliegenden Erfindung erfolgt die Ermittlung des durch den zweiten Schalter zum Zeitpunkt seines Ausschaltens fließenden Stroms oder der von der Sperrwandlerschaltung abgegebenen Spannung in einfacher Weise über die primärseitige Bestimmung der Entladegeschwindigkeit.

Die Entladegeschwindigkeit gibt an, um welchen Betrag sich die Ladungsmenge der Kapazität innerhalb eines bestimmten Zeitabschnitts nach dem Ausschalten des zweiten Schalters verringert bzw. wie lange eine bestimmte Abnahme der Ladungsmenge dauert. Sie kann mittels des zeitlichen Verlaufs der von der Kapazität abgegebenen Spannung und/oder dem zeitlichen Verlauf des Entladestroms der Kapazität ermittelt werden.

Die Steuereinrichtung kann den zweiten Schalter nach Ablauf einer vorgegebenen Zeit nachdem der Strom durch den zweiten Schalter (oder die Diode falls vorhanden) auf null abgesunken ist ausschalten, so dass keine Verbindung zur Primärseite für die Steuerung des zweiten Schalters nötig ist. Alternativ kann die Steuereinrichtung sowohl den ersten Schalter als auch den zweiten Schalter steuern. Zusätzlich oder alternativ kann die Steuereinrichtung den Ausschaltzeitpunkt des zweiten Schalters bzw. die vorgegebene Zeit auf der Grundlage des ermittelten, zum Ausschaltzeitpunkt fließenden Stroms ändern, um beispielsweise die Bestimmung des Maßes für die Entladegeschwindigkeit zu verbessern und/oder eine Abweichung des für die Entladung der parasitären Kapazitäten vorgegebenen Stroms zu korrigieren.

Die Ermittlung des durch den zweiten Schalter zum Zeitpunkt seines Ausschaltens fließenden Stroms und die entsprechende Ansteuerung des zweiten Schalters kann in jedem Schaltzyklus oder nur zu bestimmten Zeiten oder Ereignissen (Anlaufphase, Änderung des Dimmpegels, Wechsel vom kontinuierlichen- oder Grenzbetrieb in den diskontinuierlichen Betrieb) erfolgen.

Die Steuereinrichtung kann dazu ausgelegt sein, zumindest den ersten Schalter auf der Grundlage des ermittelten Stromes anzusteuern, um beispielsweise eine vorgegebene Abgabeleistung zu halten oder einzustellen.

Der erste Schalter kann ein Transistor sein und die Kapazität durch die Drain-Source-Kapazität des Transistors und/oder einen an den Drain- und Source-Anschlüssen des Transistors angekoppelten Snubber-Kondensator gebildet sein, so dass kein oder nur ein kleiner zusätzlicher Kondensator nötig ist.

Das Mittel zum Bestimmen des Maßes für die Entladegeschwindigkeit kann dazu ausgelegt sein, die Zeitdauer vom Zeitpunkt des Ausschaltens des zweiten Schalters bis zu dem Zeitpunkt, bei dem die Spannung an dem Kondensator auf einen bestimmten Wert abgefallen ist, zu bestimmen. Der Zeitpunkt des Ausschaltens kann auf der Grundlage des Ausschaltsignals für den zweiten Schalter oder aus dem Verlauf der Spannung über die Kapazität ermittelt werden.

Die Bestimmung des Zeitpunktes, bei dem die Spannung an der Kapazität auf einen bestimmten Wert abgefallen ist, kann mittels eines Komparators erfolgen, der die an der Kapazität anliegende Spannung mit dem bestimmten Wert vergleicht.

Die Spannung an der Kapazität kann direkt oder über einen Spannungsteiler gemessen werden. Alternativ kann der Transformator eine primärseitige Hilfswicklung aufweisen, wobei das Mittel zum Bestimmen des Maßes für die Entladegeschwindigkeit dazu ausgelegt ist, die an der Kapazität anliegende Spannung mittels der von der Hilfswicklung abgegebenen Spannung zu ermitteln.

Die Abhängigkeit der Entladegeschwindigkeit von dem zum Zeitpunkt des Ausschaltens fließenden Stroms kann vom Hersteller oder Anwender durch Messen der Entladegeschwindigkeit und des durch den zweiten Schalter zum Zeitpunkt seines Ausschaltens fließenden Strom bzw. der von der Sperrwandlerschaltung abgegebenen Spannung ermittelt und in Form einer Tabelle oder Formel für die Ermittlung während des Betriebs gespeichert werden, wobei die Steuereinrichtung oder das Mittel zum Bestimmen der Entladegeschwindigkeit dazu ausgelegt ist, den durch den zweiten Schalter zum Zeitpunkt seines Ausschaltens fließenden Strom mittels der Tabelle bzw. der Formel zu ermitteln, welche für die ermittelte Entladegeschwindigkeit einen Strom anzeigt.

Ist die Entladegeschwindigkeit von weiteren Faktoren, wie Betriebsart, Tastgrad, Dimmpegel und/oder dem durch den ersten Schalter fließenden Strom, abhängig, kann für zumindest einige Betriebsarten, Tastgrade oder Dimmpegel jeweils eine Tabelle oder Formel erstellt werden, wobei die Steuereinrichtung oder das Mittel zum Bestimmen des Maßes für die Entladegeschwindigkeit dazu ausgelegt ist, die entsprechende Tabelle bzw. Formel aus einer Vielzahl von Tabellen bzw. Formeln auf der Grundlage des durch den ersten Schalter fließenden Stroms, des Tastgrads der Ansteuerung zumindest des ersten Schalters und/oder eines die Sperrwandlerschaltung steuernden Dimm-Signals auszuwählen.

Gemäß der vorliegenden Erfindung weist ein Betriebsgerät für Leuchtmittel eine Sperrwandlerschaltung mit einer der oben beschriebenen Ausführungen auf.

Nachfolgend wird die Erfindung anhand der beiliegenden Zeichnungen näher erläutert. Es zeigen:
Fig. 1 eine getaktete Sperrwandlerschaltung nach einem ersten Ausführungsbeispiel gemäß der vorliegenden Erfindung,
Fig. 2 drei Diagramme mit Verläufen der durch die Primär- und Sekundärwicklung der in Fig. 1 gezeigten Sperrwandlerschaltung fließenden Ströme und dem Verlauf der Spannung über die Kapazität,
Fig. 3 schematisch den Aufbau der Messeinrichtung nach einem Ausführungsbeispiel gemäß der vorliegenden Erfindung,
Fig. 4 eine getaktete Sperrwandlerschaltung nach einem zweiten Ausführungsbeispiel gemäß der vorliegenden Erfindung,
Fig. 5 ein Betriebsgerät für Leuchtmittel nach einem Ausführungsbeispiel gemäß der vorliegenden Erfindung und
Fig. 6 ein vereinfachtes Ablaufdiagramm zur Darstellung des Verfahrens gemäß der vorliegenden Erfindung.

Komponenten mit gleichen Funktionen sind in den Figuren mit gleichen Bezugszeichen gekennzeichnet.

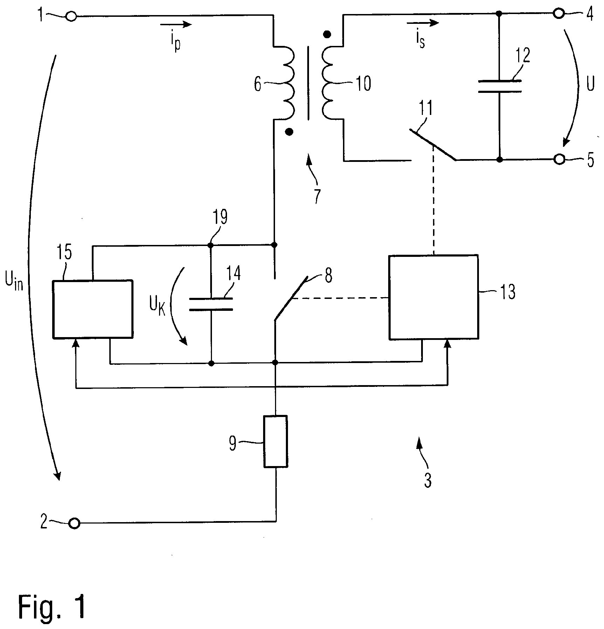

Fig. 1 zeigt eine vereinfachte Schaltung eines synchronen Sperrwandlers nach einem ersten Ausführungsbeispiel gemäß der vorliegenden Erfindung. An den zwei Eingangsanschlüssen 1, 2 der abgebildeten Sperrwandlerschaltung 3 wird eine Versorgungsspannung zugeführt, die eine Gleichspannung oder eine gleichgerichtete Wechselspannung ist und die in eine Gleichspannung mit einem anderen Spannungsniveau umgewandelt und an zwei Ausgangsanschlüssen 4, 5 der Sperrwandlerschaltung 3 ausgegeben wird. An den zwei Ausgangsanschlüssen 9, 10 können Leuchtmittel, beispielsweise LEDs oder ein weiterer Wandler (nicht gezeigt) angeschlossen sein.

Die Primärwicklung 6 des Transformators 7, ein erster steuerbarer Schalter 8 und ein Messwiderstand 9 sind in Reihe zwischen dem ersten Eingangsanschluss 1 und dem zweiten Eingangsanschluss 2, welcher mit Masse verbunden ist, geschaltet. Die Sekundärwicklung 10 des Transformators 7 und ein zweiter steuerbarer Schalter 11 sind in Reihe zwischen dem ersten Ausgangsanschluss 4 und dem zweiten Ausgangsanschluss 5 geschaltet. Ein Puffer-/Speicherkondensator 12 ist an den Ausgangsanschlüssen 4, 5 parallel angekoppelt. Primär- und Sekundärwicklung 6, 10 des Transformators 7 weisen eine unterschiedliche Polarität/Wicklungsrichtung auf. Der erste Schalter 8 und der zweite Schalter 11 können Transistoren, wie IGBTs oder MOSFETs, sein und werden von einer Steuereinrichtung 13 gesteuert, um diese ein- und auszuschalten.

Die Steuereinrichtung 13 ist vorzugsweise auf der Primärseite der Sperrwandlerschaltung 3 angeordnet und steuert den zweiten steuerbaren Schalter 11 über die Potenzialbarriere hinweg an. Die Erfassung von Messgrößen, aber auch die Ansteuerung des ersten steuerbaren Schalters 8 erfolgen dagegen vorzugsweise ohne Potenzialtrennung auf der Primärseite.

Ist der erste steuerbare Schalter 8 geöffnet, so schließt eine Kapazität den primärseitigen Kreis. Diese Kapazität kann eine parasitäre Kapazität oder, wie es in der Figur 1 dargestellt ist, ein Kondensator 14 sein, der parallel zu dem ersten Schalter 8 ausgebildet ist, so dass diese Kapazität beim Öffnen des ersten Schalters 8 den primärseitigen Kreis schließt. Der Kondensator 14 ist In Reihe zu der Primärwicklung 6 und dem Messwiderstand 9 geschaltet, wobei eine Messeinrichtung 15 den Ladezustand bzw. die Spannung u_{K} an dem Kondensator 14 erfasst. Nach dem Einschalten des ersten Schalters 8 wird der Kondensator 14 überbrückt und die Primärwicklung 6 des Transformators von einem Strom ip durchflossen, wobei der ausgeschaltete zweite Schalter 11 einen Stromfluss auf der Sekundärseite unterdrückt. Der Stromfluss i_{P} durch den ersten Schalter 8 wird mittels der über den Messwiderstand 9 abfallenden und von der Steuereinrichtung 13 erfassten Spannung bestimmt, welche den ersten Schalter 8 aus- und den zweiten Schalter 11 einschaltet, wenn der Strom i_{P} einen Schwellenwert erreicht.

Es ist zu beachten, dass allgemein für die Erfindung eine parallel zu dem ersten Schalter 8 ausgebildete Kapazität vorhanden ist. Zur Erläuterung der Erfindung wird diese Kapazität als Kondensator 14 dargestellt, der die Kapazität, zumindest teilweise, bildet.

Nach dem Ausschalten (Sperrphase) des ersten Schalters 8 wird der Kondensator 14 geladen und die in der Primärwicklung 6 gespeicherte Energie über die Sekundärwicklung 10 des Transformators in einer Entmagnetisierungsphase abgegeben, welche einen Stromfluss is auf der Sekundärseite durch den zweiten Schalter 11 erzeugt, der den Pufferkondensator 12 speist. Der Stromfluss is auf der Sekundärseite nimmt linear ab und wird schließlich null. Da der zweite Schalter 11 zunächst weiterhin geschlossen ist, treibt der Pufferkondensator 12 dann einen Strom iₛ in umgekehrter Richtung durch die Sekundärwicklung 10 und den zweiten Schalter 11, der schließlich von der Steuereinrichtung 13 ausgeschaltet wird. Dies führt zu einem Stromfluss ip auf der Primärseite, der aufgrund der magnetischen Kopplung des Transformators den Kondensator 14 wieder entlädt.

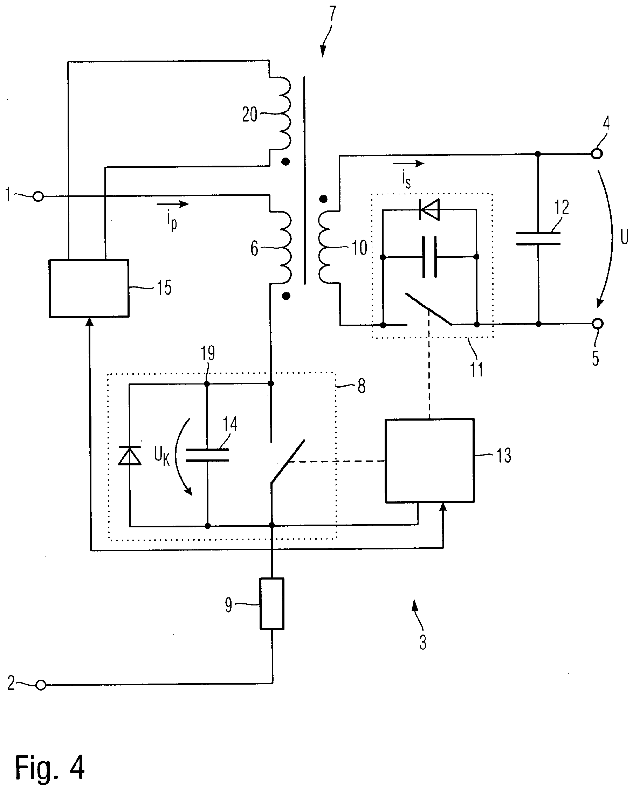

Alternativ kann der zweite Schalter 11 erst nach dem Ausschalten des ersten Schalters 8 eingeschaltet werden, um die ungewollte Beschädigung der Bauteile zu vermeiden, wobei zwischen dem Ausschalten des ersten Schalters 8 und dem Einschalten des zweiten Schalters 11 eine kurze Zeitdauer t_{dead} liegen kann. Durch die meist in dem zweiten Schalter 11 enthaltene parasitäre Diode (siehe Fig. 4) kann eine schnelle Kommutierung erfolgen. Der zweite Schalter 11 sollte jedoch schnell eingeschaltet werden, um unnötige Verluste zu vermeiden.

Die Messeinrichtung 15 ermittelt die Entladegeschwindigkeit bzw. eine Zeitdauer bis zum Erreichen eines vorgegebenen Spannungswerts des Kondensators 14, welche von dem durch den zweiten Schalter 8 zum Zeitpunkt seines Ausschaltens fließenden Strom is bzw. der an den Ausgangsanschlüssen 4, 5 anliegenden Spannung abhängt. Hierzu empfängt die Messeinrichtung 15 ein Signal von der Steuereinrichtung 13, welches den Zeitpunkt des Ausschaltens des zweiten Schalters 11 anzeigt, und ermittelt die Zeitdauer zwischen dem Zeitpunkt des Ausschaltens und dem Zeitpunkt, zu dem die Spannung an dem Kondensator 14 auf einen bestimmten Grenzwert abgefallen ist. Auf der Grundlage der ermittelten Zeitdauer bestimmt die Messeinrichtung 15 oder die Steuereinrichtung 13 den durch den zweiten Schalter 11 zum Zeitpunkt seines Ausschaltens fließenden Strom oder die von der Sperrwandlerschaltung 3 abgegebenen Spannung U.

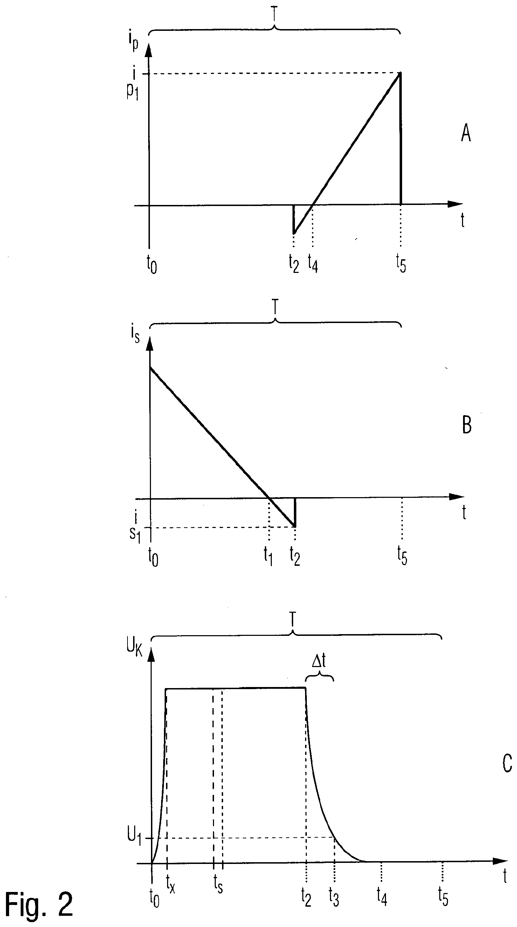

Fig. 2 zeigt in dem Diagramm A den Verlauf des Stromes i_{P} durch die Primärwicklung 6 für einen Schaltzyklus T (t₀ bis t₅), in dem Diagramm B den Verlauf des Stromes is durch die Sekundärwicklung 10 für den Schaltzyklus T und in dem Diagramm C den Verlauf der Spannung u_{K} für den Schaltzyklus T. Zum Zeitpunkt tₒ wird der erste Schalter 8 geöffnet und der zweite Schalter 11 wird geschlossen.

Sobald der erste Schalter 8 geöffnet und der zweite Schalter 11 geschlossen wird, beginnt auf der Sekundärseite ein sekundärseitiger Strom iₛ zu fließen. Sobald der zweite Schalter 11 geschlossen ist und ein sekundärseitiger Strom iₛ fließt, entspricht die von der Spannung am Pufferkondensator 12 bzw. der von der Sperrwandlerschaltung 3 abgegebene Spannung U der Spannung über der Sekundärseite des Transformators, also der Spannung über der Sekundärwicklung 10. Die Spannung auf der Primärseite des Transformators 7, also über der Primärwicklung 6, ist während der nunmehr vorliegenden Entmagnetisierungsphase der Sekundärwicklung 10 proportional zu der Spannung auf der Sekundärseite des Transformators 7. Dieses proportionale Spannungsverhältnis ergibt sich aufgrund des Kopplungsverhältnisses des Transformators (also des bekannten Windungsverhältnisses n des Transformators 7). Die Entmagnetisierungsphase der Sekundärwicklung 10 beginnt nach dem Öffnen des ersten Schalters 8 und dem gleichzeitigen Schließen des zweiten Schalters 11.

Somit kann in dem Zeitraum nach dem Schließen des zweiten Schalters 11 bis zum Zeitpunkt t₂, also solange ein sekundärseitiger Strom iₛ fließt, mit Hilfe der indirekten Erfassung der Spannung über der Sekundärwicklung 10 auch die Sperrwandlerschaltung 3 abgegebene Spannung U erfasst werden, beispielsweise durch eine Messung in dem Zeitraum zwischen tₒ und t₂.

Vorzugsweise erfolgt diese indirekte Erfassung der durch die Sperrwandlerschaltung 3 abgegebenen Spannung U durch ein Abtasten der Primärspannung am Zeitpunkt tₛ während der Einschaltzeitdauer des zweiten Schalters 11.

Zum Zeitpunkt tₒ wird der erste Schalter 8 geöffnet und der zweite Schalter 11 ist geschlossen. Durch das Öffnen des ersten Schalters 8 wird der Strom auf der Primärseite durch den ersten Schalter 8 unterbrochen und die Spannung über dem ersten Schalter 8 steigt unmittelbar an. Somit wird der Kondensator 14 geladen, da nunmehr durch das Schließen des zweiten Schalters 11 und aufgrund der Magnetisierung der Sekundärwicklung 10 auf der Sekundärseite ein Strom iₛ fließt. Wie bereits erwähnt, wird aufgrund der magnetischen Kopplung die Spannung der Sekundärwicklung 10 auf die Primärwicklung 6 entsprechend dem Windungsverhältnis n des Transformators übertragen. Somit steigt nach dem Zeitpunkt tₒ die Spannung über dem Kondensator 14 an, bis dieser geladen ist. Aufgrund der geringen Kapazität des Kondensators 14 ist die Phase bis zum Zeitpunkt tₓ sehr kurz. Während der Entmagnetisierung der Sekundärwicklung 10 nimmt der Strom is linear ab. Der Strom is hat bei t₁ null erreicht und wird danach negativ (da wie bereits erläutert der zweite Schalter 11 zunächst weiterhin geschlossen ist, treibt der Pufferkondensator 12 einen Strom iₛ in umgekehrter Richtung durch die Sekundärwicklung 10 weiter). Solange auf der Sekundärseite der Strom iₛ fließt, bleibt die Spannung über der Primärwicklung 6 und somit die Spannung über dem Kondensator 14 nahezu konstant. Zum Zeitpunkt t₂ wird der zweite Schalter 11 geöffnet und der erste Schalter 8 bleibt offen, worauf der Stromfluß iₛ durch den zweiten Schalter 11 unterbrochen wird. Durch den Wegfall der Spannung über der Sekundärwicklung 10 und somit auch der Primärwicklung 6 beginnt eine Entladung des Kondensators 14, und ein negativer Strom i_{P} beginnt zu fließen. Wie oben beschrieben kann zwischen dem Ein- und Ausschalten der zwei Schalter 8, 11 eine Verzögerungszeit t_{dead} vorgesehen sein, um die Gefahr von Beschädigung der Bauteile zu verringern.

Während der Entmagnetisierungsphase der Sekundärwicklung 10 und auch der nachfolgenden Phase der Entladung des Pufferkondensators 12, also bis zum Zeitpunkt t2, wird auf der Primärseite ein Stromkreis durch die Eingangsspannung (zwischen 1 und 2), die Primärwicklung 6 und den Kondensator 14 gebildet. In Kenntnis der Beträge der Eingangsspannung (Spannung über 1 und 2) und der Spannung u_{K} über dem Kondensator 14 kann somit auf die Spannung über der Primärwicklung 6 geschlossen werden. Somit kann durch Erfassung der Spannung u_{K} über dem Kondensator 14 auf die Spannung über der Primärwicklung 6 und somit auch auf die die Sperrwandlerschaltung 3 abgegebenen Spannung U geschlossen werden. Sobald der zweite Schalter 11 geöffnet wird, wird der sekundärseitig fließende Strom iₛ unterbrochen. Da nunmehr kein Strom mehr durch die Sekundärwicklung 10 fließt, bricht die Spannung über der Sekundärwicklung 10 zusammen und somit auch die Spannung über der Primärwicklung 6. Solange der erste Schalter 8 noch geöffnet ist, wird somit nunmehr die Spannung über der Kapazität 14 sinken, wodurch ein negativer Strom i_{P} zu fließen beginnt.

Die Messeinrichtung 15 misst die Zeitdauer Δt vom Zeitpunkt t₂ bis zum Zeitpunkt t₃, bei dem die sinkende Spannung u_{K} den Grenzwert u₁ erreicht. Der Abfall der Spannung u_{K} von einem konstanten bzw. in jedem Schaltzyklus T erreichten Ausgangswert zum Zeitpunkt t₂ auf den Grenzwert u₁ innerhalb der Zeitdauer Δt ist ein Maß für die Entladegeschwindigkeit. Die Steuereinrichtung 13 oder die Messeinrichtung 15 ermittelt auf der Grundlage der gemessenen Zeitdauer Δt, welche die Entladegeschwindigkeit anzeigt, den Wert isi, den der Strom is zum Zeitpunkt t₂ erreicht hat und/oder die Spannung an den Ausgangsanschlüssen 4, 5 mittels einer Tabelle oder Formel, die jeder gemessenen Zeitdauer Δt einen Strom- bzw. Spannungswert zuordnet.

Zum Zeitpunkt t₄ wird der erste Schalter 8 geschlossen und der zweite Schalter 11 bleibt geöffnet. Der Strom i_{P} steigt an, bis er den Schwellenwert i_{P1} zum Zeitpunkt t₅ erreicht und der erste Schalter 8 geöffnet und der zweite Schalter 11 geschlossen wird. Der Schwellenwert i_{P1} kann von der Steuereinrichtung 13 in Abhängigkeit eines empfangenen Dimmsignals und/oder des ermittelten Strom- bzw. Spannungswerts gesetzt werden, wobei der Schwellenwert i_{P1} erhöht wird, wenn der ermitteltet Strom- bzw. Spannungswert einen vorgegebenen Wert unterschreitet, und verringert wird, wenn der ermittelte Strom- bzw. Spannungswert größer als der vorgegebene Wert ist. Das Einschalten des ersten Schalters 8 kann nach dem Ablauf einer Wartezeit, die mit dem Ausschalten des zweiten Schalters 11 zum Zeitpunkt t₂ beginnt und größer als die maximal zu erwartende Zeitdauer Δt ist, erfolgen. Alternativ kann der erste Schalter 8 eingeschaltet werden, wenn die sinkende Spannung u_{K} den Grenzwert u₁ erreicht hat.

Die Tabelle bzw. Formel kann vor dem Regelbetrieb experimentell durch Messen der Entladegeschwindigkeit bzw. der Zeitdauer Δt und des zugehörigen Stroms is₁ für verschiedene Lastzustände an der Sperrwandlerschaltung 3 selbst oder an einem baugleichen Modell bestimmt und in der Steuereinrichtung 13 bzw. der Messeinrichtung 15 gespeichert werden.

Es ist auch möglich, dass die Sperrwandlerschaltung 3 in einem vom Anwender/Monteur aktivierbaren Lern- oder Kalibriermodus nach einem vorgegebenen Muster verschiedene Ströme bzw. Spannungen an den Ausgangsanschlüssen 4, 5 ausgibt, um verschiedene Lastzustände einzunehmen und die Steuereinrichtung 13 oder die Messeinrichtung 15 für jeden Lastzustand ein den ausgegebenen Strom und/oder die ausgegebene Spannungen anzeigendes Signal über eine im Lern-/Kalibriermodus geschaltete interne Verbindung abfragt oder über eine zwischen den Ausgangsanschlüssen 4, 5 und einer Schnittstelle der Steuereinrichtung 13 bestehenden kabelgebundene oder kabellose schaltungsexterne Verbindung empfängt, die Zeitdauer Δt misst und die gemessene Zeitdauer Δt mit dem zugehörigen Strom- und/oder Spannungswert in die Tabelle aufnimmt oder einen bestehenden Eintrag in der Tabelle korrigiert. Die Tabelle ist in einer nicht dargestellten Speichereinrichtung des Sperrwandlers 3 hinterlegt.

Ist die Zeitdauer Δt von weiteren Faktoren, wie Betriebsart, Tastgrad oder Dimmpegel, abhängig, kann für verschiedene Betriebsarten, Tastgrade oder Dimmpegel jeweils eine Tabelle oder eine mehrdimensionale Tabelle, welche einer bestimmten Kombination von unterschiedlichen Faktoren und Werten, einschließlich der Zeitdauer Δt, einen Strom- und/oder Spannungswert zuordnet, erstellt werden. Im Regelbetrieb bestimmt die Steuereinrichtung 13 oder die Messeinrichtung 15 die anzuwendende Tabelle bzw. die vorliegende Kombination, um den Strom- und/oder Spannungswert zu ermitteln.

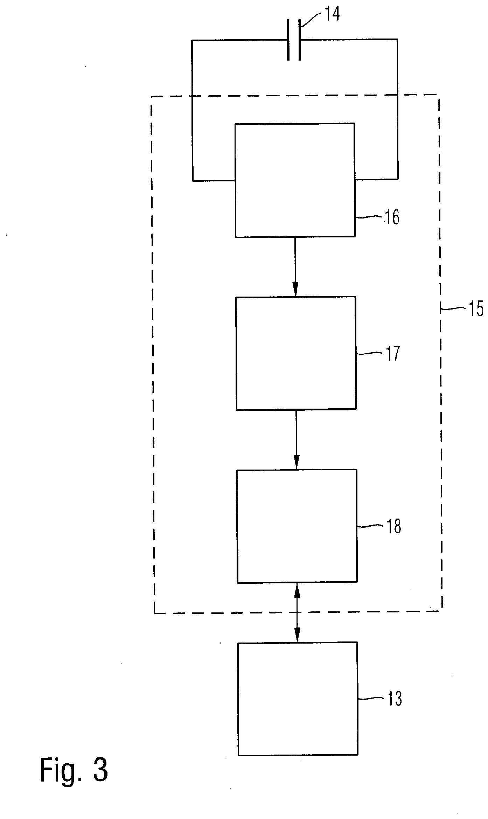

Fig. 3 zeigt den Aufbau der Messeinrichtung 15, die eine Spannungsmesseinrichtung 16 zum Messen der Spannung des Kondensators 14, einen Komparator 17 zum Vergleichen der gemessenen Spannung u_{K} mit dem Grenzwert u₁ und Ausgeben eines Stoppsignals und einen Zähler 18, der von dem Komparator 17 das Stoppsignal empfängt und von der Steuereinrichtung 13 ein Startsignal, wenn der zweite Schalter 11 zum Zeitpunkt t₂ geöffnet wird. Der Zähler 18 startet die Messung der Zeitdauer Δt beim Empfang des Startsignals, beendet die Messung beim Empfang des Stoppsignals und gibt die gemessene Zeitdauer Δt an die Steuereinrichtung 13 aus. Alternativ kann der Zähler 18 die Messung der Zeitdauer Δt starten, wenn eine abfallende Flanke der Spannung u_{K} detektiert wird. Dies ermöglicht die Messung der Zeitdauer Δt ohne ein externes Startsignal. Zudem ist keine Signalübertragung zwischen Primär- und Sekundärseite nötig, wenn der zweite Schalter 11 über eine eigene, sekundärseitige Steuerung verfügt, welche den zweiten Schalter 11 nach einer vorgegebenen Wartezeit, die mit dem Abfallen des Stromes is auf null zum Zeitpunkt t₁ beginnt, automatisch ausschaltet.

Alternativ kann die Messeinrichtung 15 den Zähler 18 erst starten, wenn die Spannung u_{K} auf einen Grenzwert abgefallen ist, der größer als der Grenzwert u₁ ist und den Zähler 18 stoppen, wenn der Grenzwert u₁ erreicht wird. Ist der durch das Ausschalten des zweiten Schalters 11 auf der Sekundärseite erzeugte Strom zu gering oder zu groß, kann dieser Strom durch eine Vergrößerung bzw. Verringerung der Zeitspanne t₁ - t₂ bzw. eine Verschiebung des Ausschaltzeitpunks t₂ in einem vorgegebenen Maß verändert werden, wobei jeder einstellbaren Zeitspanne t₁ - t₂ eine Tabelle zugeordnet ist. Alternativ oder zusätzlich kann der Grenzwert u₁ in einem vorgegebenen Maß verändert werden, beispielsweise, wenn der Grenzwert u₁ nicht innerhalb einer vorgegeben Zeit erreicht wird.

In dem in Fig. 1 gezeigten Beispiel wird die Spannung u_{K} des Kondensators 14 direkt über dem Kondensator 14 gemessen. Es ist jedoch auch möglich, die Spannung u_{K} mittels eines Spannungsteilers zwischen dem Eingangsanschluss 2 und einem sich zwischen der Primärspule 6 und dem Kondensator 14 befindlichen Schaltungspunkt 19 zu messen.

Insbesondere im diskontinuierlichen Betrieb können aufgrund von parasitären Effekten nach dem Ausschalten des ersten Schalters 8 (und auch des zweiten Schalters 11) Oszillationen der Spannung über dem jeweiligen Schalter auftreten. Um Schaltverluste des Schalters zu vermeiden, sollten solche Oszillationen beim Wählen des Wiedereinschaltzeitpunktes berücksichtigt werden bzw. der Wiedereinschaltzeitpunkt so gewählt werden, dass zum Wiedereinschaltzeitpunkt der Spannungsverlauf über dem Schalter ein Spannungsminimum aufweist oder einen Nulldurchgang mit ansteigender Flanke (Nulldurchgang nach einem Spannungsminimum). Der Zeitpunkt des Nulldurchgangs oder Informationen über den Spannungsverlauf können von der Messeinrichtung 15 zusätzlich zu der Zeitdauer Δt ermittelt und an die Steuereinrichtung 13 für die Bestimmung des optimalen Einschaltzeitpunktes (Zeitpunkt t₄) übermittelt werden.

In Sperr- und anderen Wandlerschaltungen wird für die Bestimmung des Einschaltzeitpunkts der Spannungsverlauf oft mittels einer Hilfswicklung erfasst, die mit dem Transformator bzw. mit der geschalteten, als Energiezwischenspeicher dienenden Spule gekoppelt ist. Eine solche Hilfswicklung 20 kann, insbesondere, wenn sie bereits für die Bestimmung des Einschaltzeitpunkts vorgesehen ist, zur Ermittlung der Entladegeschwindigkeit des Kondensators 14 verwendet werden.

Fig. 4 zeigt eine Sperrwandlerschaltung 3 nach einem zweiten Ausführungsbeispiel gemäß der vorliegenden Erfindung, bei der anstelle der Spannung u_{K} als primärseitige Spannung mittels einer Hilfswicklung 20 des Transformators von der Messeinrichtung 15 erfasst wird. Die Hilfswicklung 20 ist magnetisch mit der Primärwicklung 6 und der Sekundärwicklung 10 gekoppelt. Wie bereits anhand der Fig. 2 beschrieben kann die Auswertung der Spannung über der Primärwicklung 6 zur Erfassung der Spannung über der Sekundärwicklung 10 und somit auch der von der Sperrwandlerschaltung 3 abgegebenen Spannung U genutzt werden. Die Erfassung kann bei geeignetem Wicklungsverhältnis direkt oder bei sehr hohen Spannungen an der Hilfswicklung 20 über einen Spannungsteiler erfasst werden. Die Messeinrichtung 15 misst die Zeitdauer Δt gemäß eines der oben beschriebenen Verfahren und gibt das Ergebnis an die Steuereinrichtung 13 aus. Die Messeinrichtung 15 kann eine integrierte Halbleiterschaltung sein, eine integrierte Halbleiterschaltung umfassen oder Bestandteil der Steuereinrichtung 13 sein. Die Steuereinrichtung 13 kann als ein Prozessor, ein Mikroprozessor, ein Controller, ein Mikrocontroller, eine anwendungsspezifische Spezialschaltung (ASIC, "Application Specific Integrated Circuit") oder eine Kombination der genannten Einheiten ausgestaltet sein.

In der in Fig. 4 gezeigten Sperrwandlerschaltung 3 sind der erste Schalter 8 und der zweite Schalter 11 Metall-Oxid-Halbleiter-Feldeffekttransistoren (MOSFETs) und jeweils als vereinfachtes Ersatzschaltbild dargestellt. Wie aus dem Ersatzschaltbild ersichtlich ist, weist der als MOSFET ausgeführte erste Schalter 8 ein durch die Sperrschichtkapazität der internen Diode bedingtes kapazitives Element auf, das den Kondensator 14 in Form einer parasitären Kapazität des Schalters 8 bildet, der den Kreis schließt, wenn der erste Schalter 8 offen ist. Für die Ermittlung des durch den zweiten Schalter 11 zum Zeitpunkt seines Ausschaltens fließenden Stroms is wird in dem dargestellten Ausführungsbeispiel allerdings die Spannung der Hilfswicklung 20 ausgewertet. Alternativ könnte jedoch wiederum auch die Spannung über den Kondensator 14 ausgewertet werden.

Alternativ für die Ausführungsbeispiele kann der Kondensator 14 ein parallel mit dem ersten Schalter 8 verbundener Snubberkondensator sein, der störende Hochfrequenzen oder Spannungsspitzen, die beim Schalten induktiver Lasten auftreten, dämpfen soll.

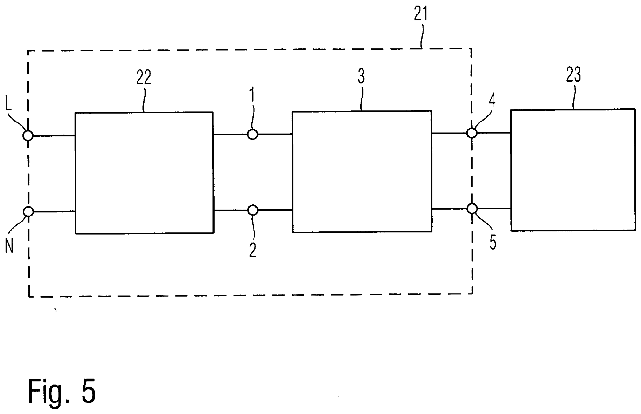

Fig. 5 zeigt ein Betriebsgerät 21 für Leuchtmittel nach einem Ausführungsbeispiel gemäß der vorliegenden Erfindung. Das Betriebsgerät 21 weist die in Fig. 1 oder 4 gezeigte Sperrwandlerschaltung 3, einen Netzanschluss L, N zum Anschluss des Betriebsgeräts 21 an eine Netz-Wechselspannung und einen Gleichrichter 22 mit Leistungsfaktorkorrektur auf, der aus der Netz-Wechselspannung die an den Eingangsanschlüssen 1, 2 der Sperrwandlerschaltung 3 anliegende Gleichspannung erzeugt. Die Sperrwandlerschaltung 3 wandelt die Gleichspannung in eine Spannung für den Betrieb eines an den Ausgangsanschlüssen 4, 5 der Sperrwandlerschaltung 3 angeschlossenen und aus mehreren LEDs bestehenden Leuchtmittels 23. Bevorzugt gibt die Sperrwandlerschaltung 3 einen geregelten Strom aus.

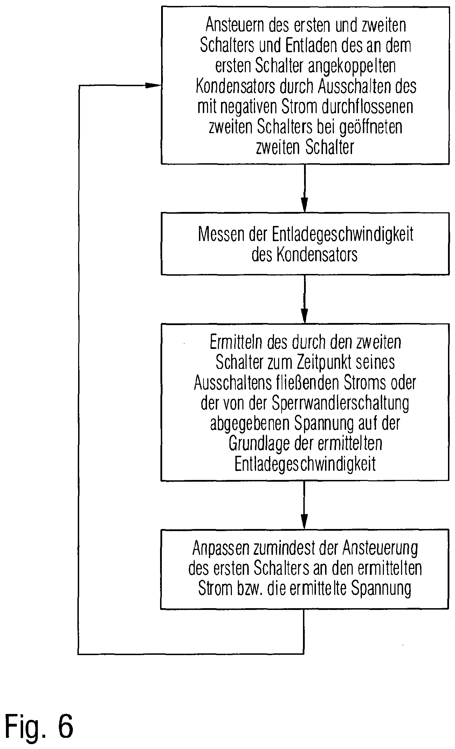

In Fig. 6 ist ein stark vereinfachtes Ablaufdiagramm dargestellt, das die einzelnen Schritte bei der Durchführung des oben ausführlich beschriebenen Verfahrens zeigt.

## Patentansprüche

1. Sperrwandlerschaltung (3), aufweisend
einen ersten steuerbaren Schalter (8) mit einer parasitären Kapazität oder einer parallel geschalteten externen Kapazität (14),
einen zweiten steuerbaren Schalter (11),
einen Transformator (7) mit einer Primärwicklung (6), welche mit dem ersten Schalter (8) elektrisch verbunden ist, und einer Sekundärwicklung (10), welche mit dem zweiten Schalter (11) elektrisch verbunden ist,
eine Steuereinrichtung (13), die dazu ausgelegt ist, den ersten Schalter (8) zu einem Zeitpunkt auszuschalten und den zweiten Schalter einzuschalten, wobei die Kapazität (14) geladen wird,
und den zweiten Schalter (11) auszuschalten, wenn der Strom durch den zweiten Schalter (11) einen negativen Wert erreicht hat, nachdem er auf null abgesunken ist, wobei die Kapazität (14) nach dem Ausschalten des zweiten Schalters entladen (11) wird,
**gekennzeichnet durch** Mittel (15) zum Bestimmen eines Maßes für die Entladegeschwindigkeit der Kapazität (14) für eine Ermittlung des durch den zweiten Schalter (11) zum Zeitpunkt seines Ausschaltens fließenden Stroms, wobei
die Steuereinrichtung (13) dazu ausgelegt ist, zumindest den ersten Schalter (8) auf der Grundlage des ermittelten Stromes einzuschalten.

2. Sperrwandlerschaltung (3) nach Anspruch 1, wobei
der erste Schalter (8) ein Transistor ist und die Kapazität (14) durch die Drain-Source-Kapazität des Transistors und/oder einen an den Drain- und Source-Anschlüssen des Transistors angekoppelten Snubber-Kondensator gebildet wird.

3. Sperrwandlerschaltung (3) nach einem der vorangegangenen Ansprüche, wobei
das Mittel (15) zum Bestimmen eines Maßes für die Entladegeschwindigkeit dazu ausgelegt ist, die Zeitdauer vom Zeitpunkt des Ausschaltens des zweiten Schalters (11) bis zu dem Zeitpunkt, bei dem die Spannung an der Kapazität (14) auf einen bestimmten Wert abgefallen ist, zu bestimmen.

4. Sperrwandlerschaltung nach Anspruch 3, wobei
das Mittel (15) zum Bestimmen des Maßes für die Entladegeschwindigkeit einen Komparator (17) zum Vergleichen der an der Kapazität (14) anliegenden Spannung mit dem bestimmten Wert aufweist.

5. Sperrwandlerschaltung (3) nach einem der vorangegangenen Ansprüche, wobei
der Transformator (7) eine primärseitige Hilfswicklung (20) aufweist und
das Mittel (15) zum Bestimmen des Maßes für die Entladegeschwindigkeit dazu ausgelegt ist, die an der Kapazität (14) anliegende Spannung mittels der von der Hilfswicklung (20) abgegebenen Spannung zu ermitteln.

6. Sperrwandlerschaltung (3) nach einem der vorangegangenen Ansprüche, wobei
die Steuereinrichtung (13) oder das Mittel (15) zum Bestimmen des Maßes für die Entladegeschwindigkeit dazu ausgelegt ist, den durch den zweiten Schalter (11) zum Zeitpunkt seines Ausschaltens fließenden Strom mittels einer Tabelle oder Formel zu ermitteln, welche für das ermittelte Maß für die Entladegeschwindigkeit einen Stromanzeigt.

7. Sperrwandlerschaltung (3) nach Anspruch 6, wobei
die Steuereinrichtung (13) oder das Mittel (15) zum Bestimmen des Maßes für die Entladegeschwindigkeit dazu ausgelegt ist, die Tabelle aus einer Vielzahl von Tabellen auf der Grundlage des durch den ersten Schalter (8) fließenden Stroms, des Tastgrads der Ansteuerung zumindest des ersten Schalters (8) und/oder eines die Sperrwandlerschaltung (3) steuernden Dimm-Signals auszuwählen.

8. Betriebsgerät (21) für Leuchtmittel (23), aufweisend zumindest eine Sperrwandlerschaltung (3) nach einem der vorangegangenen Ansprüche.

9. Verfahren zum Steuern einer Sperrwandlerschaltung (3), die einen ersten steuerbaren Schalter (8) mit einer parasitären Kapazität oder einer parallel geschalteten externen Kapazität (14), einen zweiten steuerbaren Schalter (11), einen Transformator (7) mit einer Primärwicklung (6), welche mit dem ersten Schalter (8) elektrisch verbunden ist, und einer Sekundärwicklung (10), welche mit dem zweiten Schalter (11) elektrisch verbunden ist, aufweist, mit den Schritten:
Ansteuern des ersten und zweiten Schalters (8, 11), um eine am Eingang der Sperrwandlerschaltung (3) zugeführte Gleichspannung zu wandeln, durch
- Ausschalten des ersten Schalters (8) zu einem ersten Zeitpunkt, wobei die Kapazität (14) geladen wird,
- Einschalten des zweiten Schalters zu dem ersten Zeitpunkt und
- Ausschalten des zweiten Schalters (11), wenn der Strom durch den zweiten Schalter (11) einen negativen Wert erreicht hat, nachdem er auf null abgesunken ist, wobei die Kapazität (14) nach dem Ausschalten des zweiten Schalters entladen (11) wird,
**gekennzeichnet durch** Bestimmen eines Maßes für die Entladegeschwindigkeit der Kapazität (14), und
Ermitteln des durch den zweiten Schalter (11) zum Zeitpunkt seines Ausschaltens fließenden Stroms auf der Grundlage der ermittelten Entladegeschwindigkeit und Einschalten des ersten Schalters (8) auf der Grundlage des ermittelten Stromes.

## Claims

1. Flyback converter circuit (3), comprising
a first controllable switch (8) having a parasitic capacitor or an external capacitor (14) that is connected in parallel,
a second controllable switch (11),
a transformer (7) having a primary winding (6) which is electrically connected to the first switch (8) and a secondary winding (10) which is electrically connected to the second switch (11),
a controller (13) which is designed to switch off the first switch (8) at a point in time and switch on the second switch, the capacitor (14) being charged,
and to switch off the second switch (11) when the current through the second switch (11) has reached a negative value after it has decreased to zero, the capacitor (14) being discharged after the second switch (11) is switched off,
**characterized by** means (15) for ascertaining a measure of the discharge rate of the capacitor (14) in order to determine the current flowing through the second switch (11) at the point in time when it is switched off,
the controller (13) being designed to control at least the first switch (8) on the basis of the determined current.

2. Flyback converter circuit (3) according to claim 1, wherein
the first switch (8) is a transistor, and the capacitor (14) is formed by the drain-source capacitance of the transistor and/or a snubber capacitor coupled to the drain and source connectors of the transistor.

3. Flyback converter circuit (3) according to either of the preceding claims, wherein
the means (15) for ascertaining a measure of the discharge rate is designed to ascertain the time period from the point in time when the second switch (11) is switched off to the point in time at which the voltage across the capacitor (14) has fallen to a specific value.

4. Flyback converter circuit according to claim 3, wherein
the means (15) for ascertaining the measure of the discharge rate comprises a comparator (17) for comparing the voltage, having the specific value, applied to the capacitor (14).

5. Flyback converter circuit (3) according to any of the preceding claims, wherein
the transformer (7) comprises a primary-side auxiliary winding (20), and
the means (15) for ascertaining the measure of the discharge rate is designed to determine the voltage applied to the capacitor (14) by means of the voltage output by the auxiliary winding (20).

6. Flyback converter circuit (3) according to any of the preceding claims, wherein
the controller (13) or the means (15) for ascertaining the measure of the discharge rate is designed to determine the current flowing through the second switch (11) at the point in time when it is switched off by means of a table or formula which indicates a current for the determined measure of the discharge rate.

7. Flyback converter circuit (3) according to claim 6, wherein
the controller (13) or the means (15) for ascertaining the measure of the discharge rate is designed to select the table from a plurality of tables on the basis of the current flowing through the first switch (8), the duty factor of the control of at least the first switch (8), and/or a dimming signal controlling the flyback converter circuit (3).

8. Operating device (21) for illuminants (23), comprising at least one flyback converter circuit (3) according to any of the preceding claims.

9. Method for controlling a flyback converter circuit (3) comprising a first controllable switch (8) having a parasitic capacitor or an external capacitor (14) that is connected in parallel, a second controllable switch (11), a transformer (7) having a primary winding (6) which is electrically connected to the first switch (8) and a secondary winding (10) which is electrically connected to the second switch (11), comprising the steps of:
controlling the first and second switches (8, 11) to convert a DC voltage supplied to the input of the flyback converter circuit (3) by
- switching off the first switch (8) at a first point in time, the capacitor (14) being charged,
- switching on the second switch at the first point in time and
- switching off the second switch (11) when the current through the second switch (11) has reached a negative value after it has decreased to zero, the capacitor (14) being discharged after the second switch (11) is turned off,
**characterized by** ascertaining a measure of the discharge rate of the capacitor (14), and
determining the current flowing through the second switch (11) at the point in time when it is switched off on the basis of the determined discharge rate, and switching on the first switch (8) on the basis of the determined current.

## Revendications

1. Circuit convertisseur indirect (3), présentant
un premier commutateur (8) commandable comportant une capacité parasite ou une capacité (14) externe montée en parallèle,
un second commutateur (11) commandable,
un transformateur (7) comportant un enroulement primaire (6) connecté électriquement au premier commutateur (8) et un enroulement secondaire (10) connecté électriquement au second commutateur (11),
un dispositif de commande (13) qui est configuré pour mettre le premier commutateur (8) hors circuit à un instant et pour mettre en marche le second commutateur, dans lequel la capacité (14) est chargée,
et pour mettre le second commutateur (11) hors circuit lorsque le courant traversant le second commutateur (11) a atteint une valeur négative après être tombé à zéro, dans lequel la capacité (14) est déchargée (11) après la mise hors circuit du second commutateur,
**caractérisé par** des moyens (15) permettant de déterminer une mesure de la vitesse de décharge de la capacité (14) afin de définir le courant circulant à travers le second commutateur (11) à l'instant de sa mise hors circuit, dans lequel
le dispositif de commande (13) est configuré pour mettre en marche au moins le premier commutateur (8) sur la base du courant défini.

2. Circuit convertisseur indirect (3) selon la revendication 1, dans lequel
le premier commutateur (8) est un transistor et la capacité (14) est formée par la capacité drain-source du transistor et/ou un condensateur amortisseur couplé aux bornes de drain et de source du transistor.

3. Circuit convertisseur indirect (3) selon l'une des revendications précédentes, dans lequel
les moyens (15) permettant de déterminer une mesure de la vitesse de décharge sont configurés pour déterminer la durée à partir de l'instant où le second commutateur (11) est mis hors circuit jusqu'à l'instant où la tension au niveau de la capacité (14) a chuté jusqu'à une valeur déterminée.

4. Circuit convertisseur indirect selon la revendication 3, dans lequel
les moyens (15) permettant de déterminer la mesure de la vitesse de décharge présentent un comparateur (17) permettant de comparer la tension appliquée à la capacité (14) avec la valeur déterminée.

5. Circuit convertisseur indirect (3) selon l'une des revendications précédentes, dans lequel
le transformateur (7) présente un enroulement auxiliaire (20) côté primaire et
les moyens (15) permettant de déterminer la mesure de la vitesse de décharge sont configurés pour définir la tension appliquée à la capacité (14) au moyen de la tension émise par l'enroulement auxiliaire (20).

6. Circuit convertisseur indirect (3) selon l'une des revendications précédentes, dans lequel
le dispositif de commande (13) ou les moyens (15) permettant de déterminer la mesure de la vitesse de décharge sont configurés pour définir le courant circulant à travers le second commutateur (11) à l'instant de sa mise hors circuit au moyen d'un tableau ou d'une formule indiquant un courant pour la mesure définie de la vitesse de décharge.

7. Circuit convertisseur indirect (3) selon la revendication 6, dans lequel
le dispositif de commande (13) ou les moyens (15) permettant de déterminer la mesure de la vitesse de décharge sont configurés pour sélectionner le tableau parmi une pluralité de tableaux sur la base du courant circulant à travers le premier commutateur (8), du rapport cyclique de l'activation d'au moins le premier commutateur (8) et/ou d'un signal de gradation commandant le circuit convertisseur indirect (3).

8. Appareil de fonctionnement (21) destiné à un moyen d'éclairage (23), présentant au moins un circuit convertisseur indirect (3) selon l'une des revendications précédentes.

9. Procédé permettant de commander un circuit convertisseur indirect (3) qui présente un premier commutateur (8) commandable comportant une capacité parasite ou une capacité (14) externe montée en parallèle, un second commutateur (11) commandable, un transformateur (7) comportant un enroulement primaire (6) connecté électriquement au premier commutateur (8) et un enroulement secondaire (10) connecté électriquement au second commutateur (11), comportant les étapes consistant à :
activer les premier et second commutateurs (8, 11) pour convertir une tension continue amenée à l'entrée du circuit convertisseur indirect (3) par
- la mise hors circuit du premier commutateur (8) à un premier instant, dans lequel la capacité (14) est chargée,
- la mise en marche du second commutateur au premier instant et
- la mise hors circuit du second commutateur (11) lorsque le courant traversant le second commutateur (11) a atteint une valeur négative après être tombé à zéro, dans lequel la capacité (14) est déchargée (11) après la mise hors circuit du second commutateur,
**caractérisé par** la détermination d'une mesure de la vitesse de décharge de la capacité (14), et
définir le courant circulant à travers le second commutateur (11) à l'instant de sa mise hors circuit sur la base de la vitesse de décharge définie, et mettre en marche le premier commutateur (8) sur la base du courant défini.
